# FASCICULE DE BREVET EUROPEEN

(11) **EP 2 034 680 B1**
(45) Date de publication et mention de la délivrance du brevet: **29.12.2010**
(21) Numéro de dépôt: 08290841.9
(22) Date de dépôt: 08.09.2008
(51) Int. Cl.: H04L 12/58

(54) **Procédé pour échanger des requêtes entre l'application informatique d'un terminal mobile et un serveur de messagerie instantanée**
Verfahren zum Austausch von Suchvorgängen zwischen einer Informatikanwendung eines mobilen Endgeräts und einem Instant-Messaging-Server
Method for exchanging requests between the computer application of a mobile terminal and an instant messaging server

(30) Priorité: 06.09.2007 FR 0706244
(43) Date de publication de la demande: 11.03.2009
(73) Titulaire: Miyowa, F-13002 Marseille (FR)
(72) Inventeur: Colon, François, F-13013 Marseille (FR)
(74) Mandataire: Novagraaf Technologies

(56) Documents cités:
- WO-A-2004/059447
- US-A1- 2005 030 913
- US-A1- 2005 055 443
- RISHI L ET AL: "Presence and its effect on network" PERSONAL WIRELESS COMMUNICATIONS, 2005. ICPWC 2005. 2005 IEEE INTERNATIONAL CONFERENCE ON NEW DELHI, INDIA JAN. 23-25, 2005, PISCATAWAY, NJ, USA,IEEE, 23 janvier 2005 (2005-01-23), pages 368-372, XP010798582 ISBN: 0-7803-8964-6

## Description

La présente invention concerne un procédé pour échanger des requêtes entre l'application informatique d'un terminal mobile et un serveur de messagerie instantanée. Elle concerne également un système adapté à la mise en oeuvre de ce procédé. Elle concerne enfin un terminal mobile utilisé pour la mise en oeuvre du procédé objet de l'invention.

La messagerie instantanée sur terminal mobile permet à des utilisateurs de converser par messages écrits sans avoir besoin d'indiquer l'adresse du correspondant pour chaque message envoyé comme c'est le cas pour les SMS. En principe, chaque utilisateur définit une liste d'amis (« *buddy list* ») avec qui il souhaite converser. La conversation ne peut se faire que si un ou plusieurs amis de la « *buddy list* » sont connectés au service de messagerie instantanée. Tous les messages écrits apparaissent en même temps sur les écrans des terminaux mobiles des utilisateurs inscrits sur la « *buddy list* » et connectés au service de messagerie instantanée. De cette manière, plusieurs utilisateurs peuvent converser entre eux.

Un serveur de messagerie instantanée est notamment configuré pour détecter un utilisateur connecté au service de messagerie instantanée et informer les utilisateurs de sa « *buddy list* » de sa présence afin qu'ils puissent converser.
Le serveur de messagerie instantanée est également configuré pour détecter et recevoir des messages émis depuis le terminal mobile d'un utilisateur connecté au service de messagerie instantanée et transférer ce message vers les terminaux mobiles des utilisateurs de la « *buddy list* » également connectés au service de messagerie instantanée. Les messages sont diffusés vers/depuis le serveur de messagerie instantanée selon des protocoles de communication bien connus de l'homme du métier et par l'intermédiaire d'un réseau de communication, par exemple sans fil.
Plus généralement, le serveur de messagerie instantanée est configuré pour déceler et gérer les évènements intervenant dans le système de messagerie instantanée.

Dans un système de messagerie instantanée, les terminaux mobiles comportent des applications informatiques qui émettent vers le serveur des requêtes relatives à la détection d'un événement, le serveur répondant à ces requêtes par certaines informations.
Par exemple, lorsqu'un utilisateur souhaite se connecter au service de messagerie instantanée, l'application informatique de son terminal mobile émet une requête demandant au serveur d'établir une connexion. Cette requête peut contenir l'identification de l'utilisateur et un mot de passe nécessaires pour que le serveur autorise la connexion.
Également, l'application informatique peut émettre des requêtes correspondant à une demande d'information pour savoir si le serveur a détecté des modifications dans le statut des autres terminaux mobiles susceptibles d'être connectés audit serveur. Dans ce cas, les requêtes tendent à demander au serveur s'il a détecté des utilisateurs connectés au service de messagerie instantanée et/ou si des utilisateurs initialement connectés se sont déconnectés.

Les requêtes émises peuvent également correspondre à une information de l'application informatique vers le serveur, de l'activité de ladite application. Par exemple, l'application peut émettre des requêtes indiquant au serveur qu'un message est en train d'être écrit ou qu'elle est dans l'attente d'un message ou que l'utilisateur est momentanément absent, etc.

L'application informatique émet périodiquement vers le serveur de messagerie instantanée les requêtes selon une certaine fréquence.
On connaît dans l'état de la technique le brevet international PCT WO06034933 décrivant un procédé permettant de réaliser un service de présence, qui comporte une liste de contacts (BL_R, BL-T) pouvant être affichée sur un dispositif d'affichage d'un terminal. À l'état activé, la liste de contacts (BL_R, BL-T) est elle-même affichée, et à l'état désactivé, la liste de contacts (BL_R, BL-T) n'est pas visible. En cas de changement d'état d'au moins un abonné à surveiller et/ou d'au moins un dispositif (P_Source) associé à l'abonné, ladite liste de contacts (BL_R, BL-T) est mise à jour par un dispositif de commande (P_System). Selon la présente invention, la mise à jour de la liste de contacts (BL_R, BL_T) à l'état désactivé est effectuée par le système de commande (P_System) à l'aide d'un autre procédé que celui utilisé à l'état activé.
On connaît aussi le brevet international W005019992A3 décrivant un système qui comprend un dispositif utilisateur communiquant avec un dispositif serveur dans le réseau électronique de façon à transmettre des informations de message à un ou plusieurs dispositifs d'amis présents dans ce réseau électronique. Le dispositif serveur selon l'art antérieur peut comprendre une base de données de profils qui est configurée pour stocker des profils, chacun de ces profils comprenant des attributs de profil désignés destinés à un profil correspondant des amis de messagerie. Un dispositif utilisateur peut utiliser une application de messagerie du dispositif utilisateur pour entrer un mode de regroupement dynamique afin de générer une liste d'amis dynamique à partir d'une liste d'amis statiques fondés sur une demande de regroupement des divers profils présents dans la base de données de profils
Le document WO 2004059447 décrit un système de messagerie instantanée dans lequel la gestion des requêtes de nouveau message est gérée au niveau du terminal par l'utilisateur.

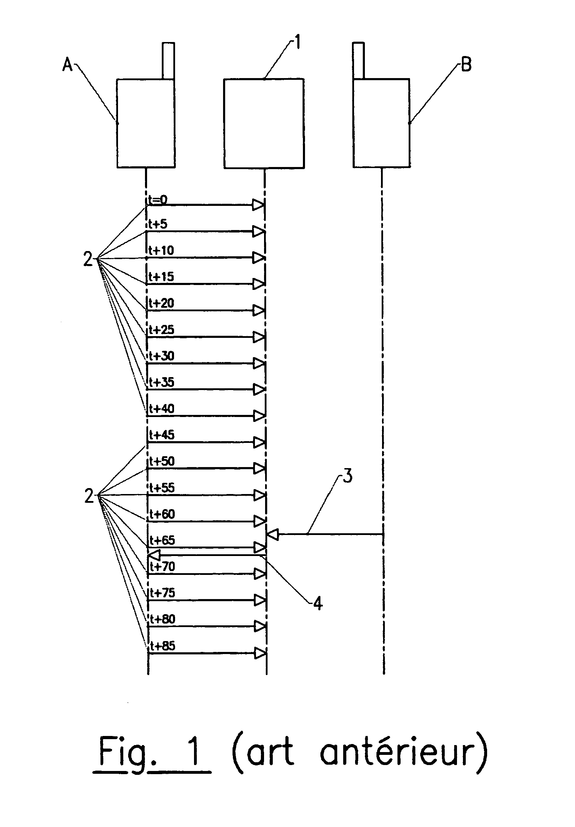

La figure 1 est un diagramme représentant schématiquement le procédé d'émission périodique de requêtes selon l'art antérieur. Le terminal mobile A d'un premier utilisateur est connecté au serveur de messagerie instantanée 1. L'application informatique du terminal mobile A émet périodiquement vers le serveur 1 des requêtes 2 relatives à la détection d'un événement. Par exemple, les requêtes 2 tendent à demander au serveur 1 s'il a détecté de nouveaux messages. Toutefois, n'importe quel autre type de requête peut être concerné.
Les requêtes 2 sont émises selon une fréquence de requête fixée à une première valeur, par exemple toutes les 5 secondes. Tant que le serveur 1 ne détecte pas un nouveau message, ledit serveur ne répond pas aux requêtes et ces dernières continuent d'être émises à la même fréquence.
Lorsqu'un second utilisateur de la « *buddy list* » du premier utilisateur écrit un nouveau message, l'application informatique du terminal mobile B dudit second utilisateur émet vers le serveur 1 une requête 3 en ce sens. À cet instant, le serveur 1 détecte ce nouvel évènement. Et lorsque l'application informatique du terminal mobile A émet une nouvelle requête 2, le serveur 1 est alors apte à émettre une réponse 4 et transmettre au premier utilisateur le message écrit par le second utilisateur.

L'application informatique du terminal mobile A du premier utilisateur continuera à émettre les requêtes 2 à la même fréquence pour être informé de la détection d'un nouveau message (i.e. d'un nouvel événement).

Dans l'exemple de la figure 1, on s'aperçoit que l'application informatique du terminal mobile A émet un nombre important de requêtes 2 avant d'obtenir la réponse 4 du serveur 1.
On comprend alors que lorsque la fréquence des requêtes est très élevée, beaucoup de ressources sont consommées par un équipement sur lequel est exécutée l'application informatique, et ce, même si aucun évènement n'est détecté par le serveur. Une fréquence élevée de requête génère donc un grand nombre de requêtes inutiles, ce qui pose un problème, d'une part parce que de l'énergie est consommée inutilement et que la batterie du terminal mobile s'use rapidement, et d'autre part parce que de telles requêtes surchargent le réseau de communication entre le serveur et l'application informatique. De telles surcharges peuvent alors être génératrices d'erreurs sur le réseau.
À l'inverse, si la fréquence des requêtes est très peu élevée, l'application informatique sera informée trop tard des évènements que le serveur aura détecté. Ceci a alors pour conséquence que certains événements nécessitant une réaction rapide de la part de l'application informatique, ne sont pas traités en temps utile.

Face aux inconvénients de l'art antérieur, le problème technique que vise à résoudre l'invention est d'optimiser la fréquence d'émission des requêtes échangées entre l'application informatique d'un terminal mobile et un serveur de messagerie instantanée.

L'invention a également pour objectif d'améliorer la gestion de l'énergie consommée par l'émission de requêtes par l'application informatique d'un terminal mobile vers un serveur de messagerie instantanée.
Un autre objectif de l'invention est de décharger le réseau de communication entre l'application informatique d'un terminal mobile et un serveur de messagerie instantanée.

La solution proposée par l'invention est un procédé pour échanger des requêtes entre l'application informatique d'un terminal mobile et un serveur de messagerie instantanée, dans lequel:
- l'application informatique émet vers le serveur des requêtes relatives à la détection d'un événement,
- les requêtes sont émises selon une fréquence de requêtes fixée à une première valeur,
le procédé étant remarquable en ce que :
- lors de l'envoi des requêtes, si l'événement n'est pas décelé par le serveur, ledit serveur commande l'application informatique pour que cette dernière émette les requêtes selon une fréquence de requêtes fixée à une seconde valeur inférieure à la première valeur,
- dès que le serveur décèle l'événement, ledit serveur commande l'application informatique pour que cette dernière émette les requêtes selon une fréquence de requêtes fixée à la première valeur.
Selon l'invention, les fréquences de requêtes dépendent d'une commande émise par le serveur lui-même. La fréquence de requêtes dépend directement de la réalisation d'un évènement dans le système de messagerie instantanée. Ceci permet donc de mieux contrôler la fréquence d'émission des requêtes en fonction de la détection ou de la non détection d'un évènement par le serveur. La fréquence des requêtes étant optimisée, la consommation d'énergie due à l'émission des requêtes est donc également mieux gérée et le réseau de communication entre l'application informatique et le serveur est désencombré.

Selon une caractéristique avantageuse permettant de modifier rapidement et de manière sûre la fréquence de requêtes,
- le serveur commande l'application informatique en transmettant à cette dernière un paramètre de modification de la fréquence de requête,
- la fréquence de requête est fixée à la première ou à la seconde valeur en fonction du paramètre de modification reçu par l'application informatique.

L'invention se rapporte également à un système conçu pour mettre en oeuvre le procédé conforme aux caractéristiques précédentes, et comprenant l'application informatique d'un terminal mobile et un serveur de messagerie instantanée, et dans lequel :
- l'application informatique comporte :
   ■ des moyens pour commander l'émission périodique des requêtes selon une certaine fréquence de requête,
   ■ des moyens pour recevoir un paramètre de modification de la fréquence de requête envoyé par le serveur,
   ■ des moyens pour modifier la fréquence de requêtes en fonction du paramètre de modification reçu,
- le serveur de messagerie instantanée comporte :
   ■ des moyens pour détecter un évènement,
   ■ des moyens pour générer un paramètre de modification de la fréquence de requêtes,
   ■ des moyens pour transmettre le paramètre de modification de la fréquence de requêtes à l'application informatique.

Selon une autre caractéristique avantageuse de l'invention permettant de simplifier la modification de la fréquence de requêtes, les moyens pour générer le paramètre de modification de la fréquence de requêtes comprennent une table de correspondance mettant en correspondance un évènement et un paramètre de modification de la fréquence de requêtes.

L'invention concerne également un terminal mobile apte à se connecter à un service de messagerie instantanée et intégrant une application informatique comportent :
- une première partie de code apte, à l'exécution, à coder l'émission périodique de requêtes selon une fréquence de requête fixée à une certaine valeur,
- une seconde partie de code apte, à l'exécution, à recevoir un paramètre de modification de la fréquence de requête,
dans laquelle dans la première partie de code, la fréquence de requête dépend du paramètre de modification.

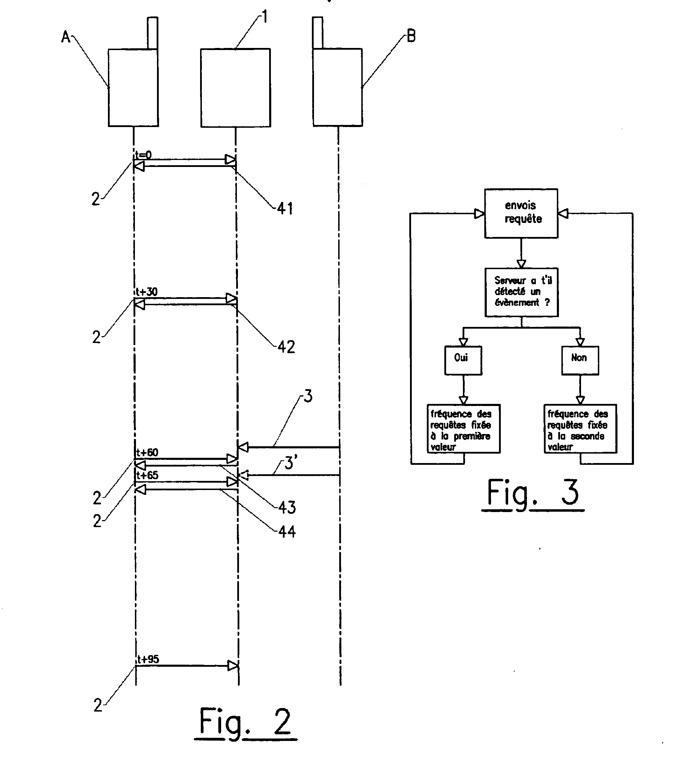

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
○ la figure 1 est un diagramme représentant schématiquement le procédé d'émission périodique de requêtes selon l'art antérieur,
○ la figure 2 est un diagramme représentant schématiquement le procédé d'émission périodique de requêtes selon l'invention,
○ la figure 3 illustre les différentes étapes du procédé de l'invention.

L'invention concerne un procédé pour échanger des requêtes entre l'application informatique d'un terminal mobile et un serveur de messagerie instantanée.

Les terminaux mobiles utilisés pour la mise en ouvre du procédé objet de l'invention peuvent être des téléphones mobiles, des appareils du type assistant digital personnel (PDA), ou tout autre terminal mobile de communication apte à se connecter à un service de messagerie instantanée. Les terminaux mobiles sont configurés pour être connectés à un réseau de communication du type MSM®, Jabber®, Yahoo !®, etc.

Les terminaux mobiles intègrent une application informatique qui émet vers le serveur de messagerie instantanée des requêtes relatives à la détection d'un événement. Par ''application '', on entend au sens de la présente invention, un ou plusieurs programmes, sous-programmes, microprogrammes ou tous autres types de software équivalents, pris seuls ou en combinaison. En exécutant des codes, programmes ou tout autre moyen équivalent, l'application informatique est apte à commander l'émission périodique des requêtes selon une fréquence souhaitée.

Le serveur est du type connu de l'homme du métier dans le domaine de la messagerie instantanée. Le serveur est connecté à un réseau de communication (MSM®, Jabber®, Yahoo !®, ...) habituellement employé pour mettre en oeuvre les services de messagerie instantanée. D'une manière bien connue, le serveur est équipé d'un processeur, contrôleur ou de tout autre moyen équivalent permettant de détecter un événement intervenant dans le système de messagerie instantanée : connexion ou déconnexion d'un utilisateur, mise en place d'un filtre pour certains utilisateurs de la « *buddy list* »*,* écriture/transmission/réception d'un message, etc.

En se rapportant à la figure 2, le terminal mobile A d'un premier utilisateur est connecté au serveur de messagerie instantanée 1. L'application informatique du terminal mobile A émet vers le serveur 1 des requêtes 2 relatives à la détection d'un événement, par exemple à la détection de nouveaux messages. Toutefois, le procédé objet de l'invention s'applique à tout autre type de requête.

Lors de l'exécution de l'application informatique, les requêtes 2 sont émises selon une fréquence de requête fixée à une première valeur, par exemple toutes les 5 secondes. En pratique, cette première valeur de fréquence de requêtes est choisie de manière à correspondre au mieux aux habitudes des utilisateurs. Elle peut par exemple être choisie en fonction du temps moyen que met un utilisateur pour écrire un message. D'une façon générale, la première valeur de fréquence de requêtes dépend du type d'événement détecté.

Conformément à l'invention, lors de l'envoi des requêtes 2, si l'événement recherché n'est pas décelé par le serveur 1, ce dernier commande l'application informatique pour qu'elle émette les requêtes selon une fréquence de requêtes fixée à une seconde valeur inférieure à la première valeur, par exemple toutes les 30 secondes. En pratique, lorsque l'application informatique envoie une première requête (t=0) et que le serveur 1 n'a détecté aucun événement, ledit serveur est alors apte à émettre une commande 41 vers le terminal A de manière à ce que l'application informatique émette les requêtes 2 selon une fréquence de requêtes moins élevée.

Il en est de même lors de l'envoi des requêtes suivantes (t+30). Si le serveur 1 n'a encore pas détecté d'événement, il émet une nouvelle commande 42 de manière à ce que l'application informatique continue d'émettre les requêtes 2 selon une fréquence de requêtes fixée à la seconde valeur. Toutefois, dans une variante de réalisation, le serveur 1 peut dans ce cas n'émettre aucune nouvelle commande et laisser l'application informatique émettre les requêtes selon la même fréquence. Cette dernière solution présente l'avantage de ne pas encombrer inutilement le réseau de communication.

À un instant donné, le serveur 1 va déceler un évènement 3. Par exemple, lorsqu'un second utilisateur de la « *buddy list* » du premier utilisateur écrit un message, l'application informatique du terminal mobile B dudit second utilisateur émet vers le serveur 1 une requête 3 en ce sens. À cet instant, le serveur 1 décèle ce nouvel évènement. Lorsque l'application informatique du terminal mobile A émet une nouvelle requête 2 (t+60), le serveur 1 est alors apte à émettre une commande 43 vers le terminal mobile A de manière à ce que l'application informatique émette les requêtes 2 selon une fréquence de requêtes plus élevée, fixée à la première valeur.

Par la suite, lors de l'envoi des requêtes suivantes 2 (t+65), si aucun nouvel événement n'est décelé par le serveur 1, ce dernier est alors apte à émettre une commande 44 vers le terminal A de manière à ce que l'application informatique émette les requêtes 2 selon une fréquence de requêtes moins élevée fixée à la seconde valeur.

Par contre, si un nouvel événement 3' est décelé entre une requête émise selon une fréquence fixée à la seconde valeur et la requête suivante émise selon une fréquence fixée à la première valeur, le serveur 1 peut commander l'application informatique de manière à ce qu'elle continue d'émettre les requêtes 2 selon une fréquence de requêtes fixée à la première valeur. Toutefois, dans une variante de réalisation, le serveur 1 peut n'émettre aucune nouvelle commande et laisser l'application informatique émettre les requêtes 2 selon une fréquence de requêtes fixée à la première valeur.

De même, si un nouvel événement est décelé entre deux requêtes successives émises selon une fréquence fixée à la première valeur, le serveur 1 peut commander l'application informatique de manière à ce qu'elle continue d'émettre les requêtes 2 selon une fréquence de requêtes fixée à la première valeur. Dans une variante de réalisation, le serveur n'émet aucune nouvelle commande et laisse l'application informatique émettre les requêtes 2 selon une fréquence de requêtes fixée à la première valeur.

Les différentes étapes et itérations du procédé objet de l'invention sont synthétisées sur la figure 3.

Le serveur 1 commande avantageusement l'application informatique en lui transmettant un paramètre pour modifier la fréquence de requête. Ce paramètre de modification est généré en fonction de la détection ou de la non détection d'un événement dans le système de messagerie instantanée. Le paramètre de modification généré par le serveur 1 peut par exemple être un code ou morceau de code, un programme ou un morceau de programme ou tout autre moyen équivalent.
Le paramètre de modification est généré par l'intermédiaire d'un programme ou autres softwares intégrés dans le serveur 1. Selon une caractéristique avantageuse de l'invention, le paramètre de modification est généré par l'intermédiaire d'une table de correspondance mettant en correspondance un type d'évènement et un paramètre de modification. En pratique, le paramètre de modification correspond à un nombre servant à multiplier ou à diviser une valeur de fréquence initialement programmée dans l'application informatique (première ou seconde valeur). Comme décrit précédemment, le paramètre de modification est avantageusement déterminé de manière à ce que la valeur de fréquence de requêtes corresponde au mieux aux habitudes des utilisateurs.

La transmission du paramètre de modification depuis le serveur 1 et sa réception par l'application informatique du terminal mobile A sont effectuées par des moyens de transmission et de réception connus l'homme du métier et habituellement employés dans les services de messagerie instantanée. De manière avantageuse, les moyens pour transmettre le paramètre de modification à l'application informatique, comprennent une première partie de code, apte, à l'exécution, à transmettre ledit paramètre de modification.

Dès que l'application informatique reçoit le paramètre de modification, ladite application analyse ledit paramètre et exécute un programme ou autres softwares configurés pour modifier la fréquence de requêtes en conséquence.
L'application informatique peut comporter une première partie de code apte, à l'exécution, à coder l'émission périodique de requêtes selon une fréquence de requête fixée à une certaine valeur (première ou seconde valeur) et une seconde partie de code apte, à l'exécution, à recevoir le paramètre de modification transmis par le serveur 1. Et dans la première partie de code, la fréquence de requête dépend du paramètre de modification.

## Revendications

1. Procédé pour échanger des requêtes entre l'application informatique d'un terminal mobile (A) et un serveur de messagerie instantanée (1), dans lequel l'application informatique émet vers le serveur (1) des requêtes (2) relatives à la détection d'un événement (3) **caractérisé en ce que** :
- lesdites requêtes (2) sont émises selon une fréquence de requêtes fixée à une première valeur en fonction du type de l'événement détecté par le serveur,
- lors de l'envoi de ces dites requêtes (2), si l'événement (3) n'est pas décelé par le serveur (1), ledit serveur commande l'application informatique pour que cette dernière émette les requêtes (2) selon une fréquence de requêtes fixée à une seconde valeur inférieure à la première valeur,
- dès que le serveur (1) décèle l'événement (3), ledit serveur commande l'application informatique pour que cette dernière émette les requêtes (2) selon une fréquence de requêtes fixée à la première valeur.

2. Procédé selon la revendication 1, dans lequel le serveur (1) commande l'application informatique de manière à ce qu'elle continue d'émettre les requêtes (2) selon une fréquence de requêtes fixée à la première valeur, si un nouvel événement (3') est décelé entre une requête émise selon une fréquence fixée à la seconde valeur et la requête suivante émise selon une fréquence fixée à la première valeur.

3. Procédé selon la revendication 1, dans lequel le serveur (1) n'émet aucune nouvelle commande et laisse l'application informatique émettre les requêtes (2) selon une fréquence de requêtes fixée à la première valeur, si un nouvel événement (3') est décelé entre une requête émise selon une fréquence fixée selon la seconde valeur et la requête suivante émise à une fréquence fixée selon la première valeur.

4. Procédé selon l'une des revendications précédentes, dans lequel le serveur (1) commande l'application informatique de manière à ce qu'elle continue d'émettre les requêtes (2) selon une fréquence de requêtes fixée à la seconde valeur, si aucun nouvel événement n'est décelé entre une requête émise selon une fréquence fixée à la première valeur et la requête suivante émise selon une fréquence fixée à la première valeur.

5. Procédé selon l'une des revendications 1 à 3, dans lequel le serveur (1) n'émet aucune nouvelle commande et laisse l'application informatique émettre les requêtes (2) selon une fréquence de requêtes fixée à la seconde valeur, si aucun nouvel événement n'est décelé entre une requête émise selon une fréquence fixée à la première valeur et la requête suivante émise selon une fréquence fixée à la première valeur.

6. Procédé selon l'une des revendications précédentes, dans lequel le serveur (1) commande l'application informatique de manière à ce qu'elle continue d'émettre les requêtes (2) selon une fréquence de requêtes fixée à la première valeur, si un nouvel événement est décelé entre deux requêtes successives émises selon la première valeur.

7. Procédé selon l'une des revendications 1 à 5, dans lequel le serveur (1) n'émet aucune nouvelle commande et laisse l'application informatique émettre les requêtes (2) selon une fréquence de requêtes fixée à la première valeur, si un nouvel événement est décelé entre deux requêtes successives émises selon la première valeur.

8. Procédé selon l'une des revendications précédentes, dans lequel le serveur (1) commande l'application informatique de manière à ce qu'elle continue d'émettre les requêtes (2) selon une fréquence de requêtes fixée à la seconde valeur, si aucun événement n'est décelé entre deux requêtes successives émises selon la seconde valeur.

9. Procédé selon l'une des revendications 1 à 7, dans lequel le serveur (1) n'émet aucune nouvelle commande et laisse l'application informatique émettre les requêtes (2) selon une fréquence de requêtes fixée à la seconde valeur, si aucun nouvel événement n'est décelé entre deux requêtes successives émises selon la seconde valeur.

10. Procédé selon l'une des revendications précédentes, dans lequel :
- le serveur (1) commande l'application informatique en transmettant à cette dernière un paramètre de modification de la fréquence de requêtes,
- la fréquence de requête est fixée à la première ou à la seconde valeur en fonction du paramètre de modification reçu par l'application informatique.

11. Système pour la mise en oeuvre du procédé conforme à l'une des revendications précédentes, comprenant un terminal mobile (A) équipé d'une application informatique et un serveur de messagerie instantanée (1), et dans lequel :
- l'application informatique comporte :
■ des moyens pour commander l'émission périodique des requêtes selon une certaine fréquence de requêtes,
■ des moyens pour recevoir un paramètre de modification de la fréquence de requête envoyé par le serveur,
■ des moyens pour modifier la fréquence de requête en fonction du paramètre de modification reçu,
- le serveur (1) comporte :
■ des moyens pour détecter un événement,
■ des moyens pour générer un paramètre de modification de la fréquence de requêtes,
■ des moyens pour transmettre le paramètre de modification de la fréquence de requêtes à l'application informatique du terminal mobile (A).

12. Système selon la revendication 11, dans lequel les moyens pour générer le paramètre de modification de la fréquence de requêtes comprennent une table de correspondance mettant en correspondance un événement et un paramètre de modification de la fréquence de requêtes.

13. Système selon l'une des revendications 11 ou 12, dans lequel les moyens pour transmettre le paramètre de modification de la fréquence de requêtes à l'application informatique, comprennent une première partie de code, apte, à l'exécution, à transmettre ledit paramètre de modification.

14. Terminal mobile apte à se connecter à un serveur d'un service de messagerie instantanée, **caractérisé en ce qu'**il intègre une application informatique comprenant :
- des moyens pour commander l'émission périodique de requêtes selon une fréquence de requête fixée à une certaine valeur,
- des moyens pour recevoir du serveur un paramètre de modification de la fréquence de requête,
- des moyens pour modifier la fréquence de requête en fonction du paramètre de modification reçu, la fréquence de requête dépend du paramètre de modification.

## Claims

1. Process for exchanging requests between a mobile terminal computer program (A) and an instantaneous message server (1), in which the computer program sends the server ( 1 ) requests (2) relating to the detection of an event (3), **characterised by** the fact that :
- the requests (2) are issued at a request frequency fixed at a first value depending on the type of event detected by the server,
- when requests (2) are sent, if the event (3) is not detected by the server (1), the server instructs the computer program to issue the requests ( 2 ) at a request frequency fixed at a second value, lower than the first value,
- as soon as the server (1) detects the event (3), the server instructs the computer program to issue the requests ( 2 ) at a request frequency fixed at the first value.

2. Process as per claim 1, in which the server (1) instructs the computer program to continue to issue requests (2) at a request frequency fixed at the first value, if a further event (3') is detected between one request issued at a frequency fixed at the second value and the next request issued at a frequency fixed at the first value.

3. Process as per claim 1, in which the server (1) issues no fresh instructions and allows the computer program to issue requests (2) at a request frequency fixed at the first value, if a fresh event (3 ') is detected between one request issued at a frequency fixed at the second value and the next request issued at a frequency fixed at the first value.

4. Process as per one of the above claims, in which the server (1) instructs the computer program to continue to issue requests (2) at a request frequency fixed at the second value, if no fresh event is detected between one request issued at a frequency fixed at the first value and the next request issued at a frequency fixed at the first value.

5. Process as per one of claims 1 - 3,in which the server (1) issues no fresh instruction and allows the computer program to issue requests (2) at a request frequency fixed at the second value, if no fresh event is detected between one request issued at a frequency fixed at the first value and the next request issued at a frequency fixed at the first value.

6. Process as per one of the above claims, in which the server (1) instructs the computer program to continue to issue requests (2) at a request frequency fixed at the first value, if no fresh event is detected between two successive requests issued at the first value.

7. Process as per one of claims 1 - 5, in which the server (1) issues no fresh instruction and allows the computer program to issue requests ( 2 ) at a request frequency fixed at the first value, if a fresh event is detected between two successive requests issued at the first value.

8. Process as per one of the above claims, in which the server (1) instructs the computer program to continue to issue requests (2) at a request frequency fixed at the second value, if no event is detected between two successive requests issued at the second value.

9. Process as per one of claims 1 - 7, in which the server (1) issues no fresh instructions and allows the computer program to issue requests ( 2 ) at a request frequency fixed at the second value, if no fresh event is detected between two successive requests issued at the second value,

10. Process as per one of the above claims, in which:
the server (1) instructs the computer program by sending it a request frequency modification parameter,
the request frequency is fixed at the first or second value depending on the modification parameter received by the computer program.

11. System for implementing the process according to one of the above claims, comprising a mobile terminal (A) equipped with a computer program and an instantaneous message server (1), and in which:
- the computer program includes:
■ means of giving instructions for the periodic issue of requests at a certain request frequency,
■ means of receiving a request frequency modification parameter sent by the server,
■ means of modifying the request frequency depending on the modification parameter received',
- the server (1) includes:
■ means of detecting an event,
■ means of generating a request frequency modification parameter,
■ means of transmitting the request frequency modification parameter to the mobile terminal (A)computer program.

12. System as per claim 11, in which the means of generating the request frequency modification parameter include a table of correspondences matching an event to a request frequency modification parameter.

13. System as per one of claims 11 or 12, in which the means of transmitting the request frequency modification parameter to the computer program include the first part of a code which when implemented transmits the said modification.

14. Mobile terminal capable of being connected to an instantaneous message service, **characterised by** the fact that it incorporates a computer program containing:
Means of giving instructions for the periodic issue of requests at a request frequency fixed at a certain value,
Means of receiving a request frequency modification parameter from the server,
Means of modifying the request frequency depending on the modification parameter received request frequency depends on the modification parameter.

## Patentansprüche

1. Verfahren zum Austausch von Abfragen zwischen der Informatikanwendung eines mobilen Endgeräts (A) und einem Instant-Messaging-Server (1), bei dem die Informatikanwendung zu dem Server (1) Abfragen (2) in Zusammenhang mit dem Erfassen eines Ereignisses (3) sendet, **dadurch gekennzeichnet, dass**:
- die Abfragen (2) gemäß einer Abfragefrequenz, die auf einen ersten Wert in Abhängigkeit von dem Typ des Ereignisses, das von dem Server erfasst wird, festgelegt ist, gesendet werden,
- bei dem Senden dieser Abfragen (2), wenn das Ereignis (3) von dem Server (1) nicht erkannt wird, der Server die Informatikanwendung steuert, damit diese Letztere Abfragen (2) gemäß einer Abfragefrequenz, die auf einen zweiten Wert, der kleiner ist als der erste, festgelegt ist, sendet,
- sobald der Server (1) das Ereignis (3) erkennt, der Server die Informatikanwendung steuert, damit diese Letztere die Abfragen (2) gemäß einer Abfragenfrequenz, die auf den ersten Wert festgelegt ist, sendet.

2. Verfahren nach Anspruch 1, bei dem der Server (1) die Informatikanwendung derart steuert, dass sie die Abfragen (2) weiterhin gemäß einer Abfragefrequenz, die auf den ersten Wert festgelegt ist, sendet, wenn ein neues Ereignis (3') zwischen einer Abfrage, die gemäß einer auf den zweiten Wert festgelegten Frequenz gesendet wird, und der darauffolgenden Abfrage, die gemäß einer auf den ersten Wert festgelegten Frequenz gesendet wird, erkannt wird.

3. Verfahren nach Anspruch 1, bei dem der Server (1) keinen neuen Befehl sendet und die Informatikanwendung die Abfragen (2) gemäß einer auf den ersten Wert festgelegten Abfragefrequenz senden lässt, wenn ein neues Ereignis (3') zwischen einer Abfrage, die gemäß einer auf den zweiten Wert festgelegten Frequenz gesendet wird, und einer darauffolgenden Abfrage, die gemäß einer auf den ersten Wert festgelegten Frequenz gesendet wird, erkannt wird.

4. Verfahren nach einem der vorhergehenden Ansprüche, bei dem der Server (1) die Informatikanwendung derart steuert, dass sie weiterhin die Abfragen (2) gemäß einer auf den zweiten Wert festgelegten Frequenz sendet, wenn kein neues Ereignis zwischen einer Abfrage, die gemäß einem auf den ersten Wert festgelegten Frequenz gesendet wird, und der darauffolgenden Abfrage, die gemäß einer auf den ersten Wert festgelegten Frequenz gesendet wird, erkannt wird.

5. Verfahren nach einem der Ansprüche 1 bis 3, bei dem der Server (1) keinen neuen Befehl sendet und die Informatikanwendung die Abfragen (2) gemäß einer auf den zweiten Wert festgelegten Abfragefrequenz senden lässt, wenn kein neues Ereignis zwischen einer Abfrage, die gemäß einer Frequenz gesendet wird, die auf den ersten Wert festgelegt ist, und der darauffolgenden Abfrage, die gemäß einer Frequenz, die auf den ersten Wert festgelegt ist, gesendet wird, erkannt wird.

6. Verfahren nach einem der vorhergehenden Ansprüche, bei dem der Server (1) die Informatikanwendung derart steuert, dass sie weiterhin die Abfragen (2) gemäß einer Abfragefrequenz sendet, die auf den ersten Wert festgelegt ist, wenn ein neues Ereignis zwischen zwei aufeinander folgenden Abfragen, die gemäß dem ersten Wert gesendet werden, erkannt wird.

7. Verfahren nach einem der Ansprüche 1 bis 5, bei dem der Server (1) keinen neuen Befehl sendet und die Informatikanwendung die Abfragen gemäß einer Abfragefrequenz, die auf den ersten Wert festgelegt ist, senden lässt, wenn ein neues Ereignis zwischen zwei aufeinander folgenden Abfragen, die gemäß dem ersten Wert gesendet werden, festgestellt wird.

8. Verfahren nach einem der vorhergehenden Ansprüche, bei dem der Server (1) die Informatikanwendung derart steuert, dass sie die Abfragen (2) weiterhin gemäß einer Abfragefrequenz sendet, die auf den zweiten Wert festgelegt ist, wenn zwischen zwei aufeinander folgende Abfragen, die gemäß dem zweiten Wert gesendet werden, kein Ereignis erkannt wird.

9. Verfahren nach einem der Ansprüche 1 bis 7, bei dem der Server (1) keinen neuen Befehl sendet und die Informatikanwendung die Abfragen (2) gemäß einer Abfragefrequenz senden lässt, die auf den zweiten Wert festgelegt ist, wenn kein neues Ereignis zwischen zwei aufeinander folgenden Abfragen, die gemäß dem zweiten Wert gesendet werden, erkannt wird.

10. Verfahren nach einem der vorhergehenden Ansprüche, bei dem:
- der Server (1) die Informatikanwendung steuert, indem er dieser Letzteren einen Parameter zum Ändern der Abfragefrequenz sendet,
- die Abfragefrequenz auf den ersten oder den zweiten Wert in Abhängigkeit von dem Änderungsparameter, den die Informatikanwendung empfangen hat, festgelegt wird.

11. System zum Umsetzen des Verfahrens nach einem der vorhergehenden Ansprüche, das ein mobiles Endgerät (A), das mit einer Informatikanwendung ausgestattet ist, und einen Instant-Messaging-Server (1) aufweist, und bei dem:
- die Informatikanwendung Folgendes aufweist:
• Mittel zum Steuern des periodischen Sendens der Abfragen gemäß einer bestimmten Abfragefrequenz,
• Mittel zum Empfangen eines Parameters zum Ändern der Abfragefrequenz, der von dem Server gesendet wird,
• Mittel zum Ändern der Abfragefrequenz in Abhängigkeit von dem empfangenen Änderungsparameter,
- der Server (1) Folgendes aufweist:
• Mittel zum Erfassen eines Ereignisses,
• Mittel zum Erzeugen eines Parameters zum Ändern der Abfragefrequenz,
• Mittel zum Übertragen des Parameters zum Ändern der Abfragefrequenz an die Informatikanwendung des mobilen Endgeräts (A).

12. System nach Anspruch 11, bei dem die Mittel zum Erzeugen des Parameters zum Ändern der Abfragefrequenz eine Entsprechungstabelle aufweisen, die ein Ereignis und einen Parameter zum Ändern der Abfragefrequenz gegenüberstellt.

13. System nach einem der Ansprüche 11 oder 12, bei dem die Mittel zum Übertragen des Parameters zum Ändern der Abfragefrequenz an die Informatikanwendung einen ersten Codeteil aufweisen, der bei der Ausführung den Änderungsparameter übertragen kann.

14. Mobiles Endgerät, das sich mit einem Server eines Instant-Messaging-Dienstes verbinden kann, **dadurch gekennzeichnet, dass** es eine Informatikanwendung enthält, die Folgendes aufweist:
- Mittel zum Steuern des periodischen Sendens von Abfragen gemäß einer Abfragefrequenz, die auf einen bestimmten Wert festgelegt ist,
- Mittel zum Empfangen vom Server eines Parameters zum Ändern der Abfragefrequenz,
- Mittel zum Ändern der Abfragefrequenz in Abhängigkeit von dem empfangenen Änderungsparameter, wobei die Abfragefrequenz von dem Änderungsparameter abhängt.
